(19) Europäisches Patentamt
European Patent Office
Office européen des brevets

(11) **EP 2 374 047 B1**

(12) **EUROPÄISCHE PATENTSCHRIFT**

(45) Veröffentlichungstag und Bekanntmachung des Hinweises auf die Patenterteilung:
**24.08.2016   Patentblatt 2016/34**

(51) Int Cl.:
*G05D 23/13* *(2006.01)*      *H02K 23/00* *(2006.01)*
*H02P 7/00* *(2016.01)*

(21) Anmeldenummer: **09771710.2**

(22) Anmeldetag: **02.12.2009**

(86) Internationale Anmeldenummer:
**PCT/EP2009/008573**

(87) Internationale Veröffentlichungsnummer:
**WO 2010/075926 (08.07.2010 Gazette 2010/27)**

(54) **VORRICHTUNG UND VERFAHREN ZUM BETRIEB EINES ANTRIEBS**

DEVICE AND METHOD FOR OPERATING A DRIVE

PROCÉDÉ ET DISPOSITIF PERMETTANT DE FAIRE FONCTIONNER UN ENTRAÎNEMENT

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **08.12.2008   DE 102008060672**

(43) Veröffentlichungstag der Anmeldung:
**12.10.2011   Patentblatt 2011/41**

(73) Patentinhaber: **Grohe AG**
**58675 Hemer (DE)**

(72) Erfinder:
• **HUCK, Kai**
  **58300 Wetter (DE)**
• **BERTRAM, Jan, Erik**
  **44803 Bochum (DE)**

(56) Entgegenhaltungen:
**EP-A2- 1 333 150        EP-A2- 1 605 327**
**DE-A1- 4 138 194        DE-A1- 10 304 837**
**DE-U1- 20 316 371       US-A- 5 132 602**

**Beschreibung**

Die vorliegende Erfindung betrifft eine Vorrichtung und ein Verfahren zum Betrieb eines Antriebs insbesondere für ein Mischventil für Kalt- und Heißwasser.

Aus der DE 35 27 906 A1 ist eine Schaltungsanordnung zur Positionierung eines Fahrzeugsitzes unter Auswertung von periodischen Stromschwankungen bekannt. Aus der DE 10 2005 037 471 A1, DE 197 29 238 C1 und der DE 10 2005 018 526 A1 ist ein Verfahren zur Positionierung oder Drehzahlmessung einer beweglichen Fensterscheibe in einem Kraftfahrzeug bekannt.

Aus der DE 10 2006 033 352 A1 ist eine sanitäre Unterputzarmatur mit einem Basiskörper und einer elektrisch betriebenen Mischarmatur bekannt. Aus der DE 600 06 928 T2 ist eine Vorrichtung zum Abgeben und Mischen von Wasser bekannt, bei denen die Abgabe im Wesentlichen automatisch durch Sensormittel gesteuert wird, welche die Anwesenheit des Verbrauchers anzeigen. Aus der EP 1 605 327 A2 ist ein sanitäres Thermostatventil bekannt, dass ein Thermostatelement im Gehäuse zur Einstellung einer Solltemperatur des Mischwassers aufweist. Das Thermostatelement wird von einem elektrischen Linearaktuator, der einen Schrittmotor mit mehreren Statorwicklungen und einen Rotor umfasst, beaufschlagt.

Weiterhin offenbart die DE 41 38 194 A1 ein Verfahren zum Betrieb eines Antriebs mit einem mechanisch kommutierten Elektromotor, bei dem eine Drehposition des Antriebs aus einer Welligkeit eines Motorstroms des Elektromotors und bei dem zumindest ein Korrekturwert für eine Fehlercharakteristik des Elektromotors bestimmt wird. Der Korrekturwert wird durch den Vergleich der von einem Impulsbildner abgegebenen Welligkeitsimpulsen und den von einem Impulsgeber abgegebenen Impuls, der jedoch einer 360° Motorwellendrehung entspricht, bestimmt. Ein weiteres Verfahren zum Betrieb eines Antriebs mit einem mechanisch kommutierten Elektromotor offenbart die EP 1 333 150 A2, wobei der Korrekturwert für eine Positionierung des Antriebs durch den Vergleich der gezählten Wellen des Motorstroms mit einer Endanschlagposition bestimmt wird.

Der Erfindung liegt die Aufgabe zu Grunde, ein Verfahren zum Betrieb eines Antriebs möglichst zu verbessern.

Diese Aufgabe wird durch ein Verfahren mit den Merkmalen des unabhängigen Anspruchs 1 gelöst. Vorteilhafte Weiterbildungen sind Gegenstand von abhängigen Ansprüchen und in der Beschreibung enthalten.

Demzufolge ist ein Verfahren zum Betrieb eines Antriebs mit einem mechanisch kommutierten Elektromotor vorgesehen. Ein mechanisch kommutierter Elektromotor weist in der Regel zwei drehfest angeordnete Bürsten und mit der Drehbewegung des Elektromotors bewegliche Kommutatorlamellen auf, die die Bürsten elektrisch kontaktieren.

Eine Drehposition des Antriebs wird aus einer Welligkeit eines Motorstroms des Elektromotors durch eine Schaltung bestimmt. Eine derartige Stromwelligkeit wird auch als Strom-Ripple bezeichnet. Das Zählen der Wellen der Stromwelligkeit wird auch als Ripple-Count bezeichnet.

Zumindest ein Korrekturwert wird für eine Fehlercharakteristik des Elektromotors bestimmt. Der Korrekturwert ist motorspezifisch und kann von weiteren physikalischen Größen abhängen.

Zur Bestimmung des Korrekturwertes wird der Antrieb zunächst in eine mittels eines Positionssensors sensierbare Referenzposition verfahren. Hierzu steuert vorzugsweise die Schaltung den Elektromotor an. Bevorzugt wird der Elektromotor derart gesteuert, dass die Referenzposition durch ein oder mehrere Signale des Positionssensors erkannt wird.

Zur Bestimmung des Korrekturwertes wird der Antrieb ausgehend von der Referenzposition in mehrere zur Referenzposition unterschiedlich beabstandete Positionen verfahren. Bevorzugt werden die unterschiedlich beabstandeten Positionen aufeinander folgend angefahren.

Nach dem Verfahren in die zur Referenzposition unterschiedlich beabstandeten Positionen wird zumindest eine Positionsabweichung durch die Schaltung bestimmt. Eine Positionsabweichung ist dabei der Unterschied zwischen einer realen Verstellposition des Antriebs, die an der Referenzposition ermittelt werden kann, und der durch die Auswertung der Stromwelligkeit bestimmten Position.

Der Korrekturwert wird aus der bestimmten Positionsabweichung ermittelt, insbesondere berechnet und in einem Speicher gespeichert. Bevorzugt werden die Korrekturwerte zur Korrektur der mittels der Welligkeit ermittelten Position verwendet. Im Falle des Überfahrens der mittels des Positionssensors sensierten Referenzposition wird die mittels der Welligkeit ermittelte Position vorzugsweise normiert und hierzu vorteilhafterweise auf einen vorbestimmten Positionswert gesetzt.

Der Erfindung liegt weiterhin die Aufgabe zu Grunde eine möglichst verbesserte Vorrichtung anzugeben.

Diese Aufgabe wird durch die Vorrichtung mit den Merkmalen des unabhängigen Anspruchs 6 gelöst. Vorteilhafte Weiterbildungen sind Gegenstand von abhängigen Ansprüchen und in der Beschreibung enthalten.

Demzufolge ist eine Vorrichtung mit einem Antrieb mit einem mechanisch kommutierten Elektromotor vorgesehen. Im Gegensatz zum elektrisch kommutierten Elektromotor (bspw. Synchronmotor) erfolgt die Kommutierung bei der mechanischen Kommutierung, indem auf Kommutatorlamellen des Elektromotors gleitende Bürsten mit den Kommutatorlamellen mechanisch betätigte Schalter bilden.

Die Vorrichtung weist eine vorteilhafterweise programmierbare Schaltung zur Steuerung des Elektromotors auf. Zur Steuerung des Elektromotors ist die Schaltung mit dem Elektromotor beispielsweise über Kabel verbunden. Die Schaltung weist zur Steuerung vorzugsweise einen Leistungsschalter, wie beispielsweise ein Relais oder einen Halbleiterleistungsschalter zum Schalten des Motorstroms auf. Zur Generierung von Steuersignalen für die Steuerung weist die Schaltung bevorzugt eine Recheneinheit, beispielsweise einen Mikrocontroller auf.

Die Schaltung ist ausgebildet eine Drehposition des Antriebs aus einer Welligkeit eines Motorstroms durch den Elektromotor zu bestimmen. Hierzu weist die Schaltung Messmittel, insbesondere einen Shunt-Widerstand und einen Analog-Digital-Umsetzer auf. Zur Bestimmung der Drehposition werden vorzugsweise eine Anzahl ermittelter Wellen der Welligkeit der aktuellen Drehposition entsprechend der Verstellrichtung hinzuaddiert beziehungsweise subtrahiert. Die Schaltung ist vorzugsweise zum Addieren oder Subtrahieren gezählter Wellen der Welligkeit des Motorstroms zum/vom aktuellen Positionswert ausgebildet. Das Zählen der Wellen entspricht dabei einem schrittweisen (Inkrement) Erhöhen bzw. Vermindern der Drehposition um einen festen (Winkel-)Wert.

Zusätzlich weist der Antrieb einen mit der Schaltung verbundenen Positionssensor auf. Der Positionssensor ist unabhängig von der Welligkeit des Motorstroms zur Sensierung zumindest einer Verstellposition ausgebildet. Ein Positionssensor kann auch als Weg(mess)sensor bezeichnet werden. Dem Positionssensor ist ein Geber zugeordnet.

Die Schaltung ist eingerichtet den Antrieb in eine mittels des Positionssensors sensierbare Referenzposition durch Steuerung des Elektromotors zu verfahren. Dies kann auch als Referenzfahrt oder Referenzieren bezeichnet werden. Mittels der Referenzfahrt wird die durch Auswertung der Wellen der Welligkeit ermittelte Position bezüglich der Referenzposition normiert, beispielsweise auf den Positionswert "Null" gesetzt. Die Schaltung ist eingerichtet den Antrieb ausgehend von der Referenzposition in mehrere von der Referenzposition unterschiedlich beabstandete Positionen zu verfahren. Die Schaltung ist eingerichtet zumindest eine Positionsabweichung aus dem Verfahren in die von der Referenzposition beabstandete Positionen zu bestimmen. Vorzugsweise wird nachfolgend erneut die Referenzposition angefahren.

Die Schaltung weist einen Speicher auf. Die Schaltung ist eingerichtet zumindest einen Korrekturwert für eine Fehlercharakteristik des Elektromotors insbesondere mittels einer Recheneinheit aus den bestimmten Positionsabweichungen zu ermitteln, insbesondere zu berechnen. Der Korrekturwert wird in dem Speicher vorzugsweise nichtflüchtig gespeichert.

Die im Folgenden beschriebenen Weiterbildungen beziehen sich sowohl auf die Vorrichtung, als auch auf das Verfahren. Verfahrensmerkmale ergeben sich dabei aus Funktionen der Schaltung der Vorrichtung. Funktionen der Vorrichtung sind aus Verfahrensmerkmalen ableitbar.

Gemäß einer vorteilhaften Weiterbildung ist vorgesehen, dass zur Bestimmung von zumindest zwei Korrekturwerten der Antrieb ausgehend von der Referenzposition in beide Verstellrichtungen verfahren wird. Hierzu sind mehrere von der Referenzposition unterschiedlich beabstandete Positionen vorzugsweise beidseitig der Referenzposition vorgesehen. Beispielsweise sind die von der Referenzposition beabstandeten Positionen bezüglich der Referenzposition spiegelbildlich angeordnet.

In einer besonders vorteilhaften Ausgestaltungsvariante wird zum Verfahren des Antriebs in die mehreren von der Referenzposition beabstandeten Positionen der Elektromotor durch die Schaltung für eine vorbestimmte Anzahl von Wellen der Welligkeit des Motorstroms angesteuert. Nach Erreichen der vorbestimmten Anzahl von Wellen wird der Elektromotor vorzugsweise gestoppt und zum Anfahren der nächsten Position erneut gestartet. Mit Erreichen der letzten vorbestimmten Position wird bevorzugt erneut die Referenzposition angefahren und mit der Sensierung durch den Positionssensor eine Gesamtabweichung bestimmt.

Gemäß einer vorteilhaften Ausgestaltung sind mehrere der von der Referenzposition beabstandeten Positionen zueinander äquidistant. Vorteilhafterweise sind die von der Referenzposition in einer ersten Verstellrichtung beabstandeten Positionen in einem ersten festen Abstand, beispielsweise 10 Wellen, angeordnet. Vorteilhafterweise sind die von der Referenzposition in einer zweiten Verstellrichtung beabstandeten Positionen in einem zweiten festen Abstand, beispielsweise 20 Wellen, angeordnet.

Bevorzugt wird der Elektromotor in jeder der von der Referenzposition beabstandeten Positionen gestoppt und danach erneut gestartet.

Der Korrekturwert wird bevorzugt berechnet. In einer besonders vorteilhaften Ausgestaltung wird der Korrekturwert durch Mittelung von Positionsabweichungen berechnet. Vorteilhafterweise wird eine Gesamtabweichung durch eine Anzahl von Positionen dividiert. Bevorzugt wird dabei jeweils ein Korrekturwert je Verstellrichtung unabhängig voneinander berechnet.

Das Verfahren wird für eine Steuerung eines Mischventils für Kaltwasser und Warmwasser verwendet. Gemäß einer vorteilhaften Ausgestaltung wird ein Thermostat des Mischventils für Kaltwasser und Warmwasser mittels des Elektromotors des Antriebs positioniert. Bevorzugt wird eine Mischwassertemperatur anhand der bestimmten Drehposition gesteuert.

Die Vorrichtung weist ein Mischventil für Kaltwasser und Heißwasser mit thermostatischer Regelung der Mischwassertemperatur auf. Dabei weist das Mischventil einen mit dem Antrieb mechanisch koppelbaren oder gekoppelten Thermostaten auf. Die Schaltung ist dabei eingerichtet anhand der bestimmten Drehposition die Mischwassertemperatur zu steuern.

Gemäß einer besonders bevorzugten Weiterbildung sind der Geber und der Positionssensor ausgebildet ein für eine vorbestimmte Mischwassertemperatur charakteristisches Signal zu erzeugen. Bevorzugt erzeugen der Geber und der Positionssensor genau ein charakteristisches Signal für genau eine durch Eichung eingestellte Mischwassertemperatur.

In einer vorteilhaften Ausgestaltung ist der Positionssensor als Schalter ausgebildet. Der Schalter ist beispielsweise ein Wechselschalter, ein Schließer oder Öffner. Auch ein Taster ist dabei als Schalter zu verstehen. Vorzugsweise ist der Geber als insbesondere abtriebsseitig vom Antrieb bewegtes Nockenelement ausgebildet. Beispielsweise ist das Nockenelement eine Nockenwelle, Nockenscheibe oder ein Nockenring. Die Nocken des Nockenelements sind zur Betätigung des Schalters positioniert. Alternativ ist der Geber vorteilhafterweise ein Magnet und der Positionssensor ein Hallsensor. Alternativ ist der Positionssensor vorteilhafterweise ein optischer Sensor und der Geber eine optische Scheibe (Lochscheibe, Schlitzscheibe).

Gemäß einer vorteilhaften Weiterbildung ist vorgesehen, dass der Antrieb und der Thermostat lösbar mechanisch gekoppelt sind. Vorzugsweise weist das Mischventil eine Kupplung zur mechanischen Kopplung auf. Vor der mechanischen Kopplung des Antriebs und des Thermostats wird vorzugsweise ein Geber in einer Referenzfahrt durch den Antrieb in die Referenzposition zu dem Positionssensor bewegt. Vorzugsweise werden unmittelbar nachfolgend die Korrekturwerte bestimmt und der Antrieb dabei wieder in die Referenzposition verstellt. Zudem kann der Thermostat in eine Position für eine vorbestimmte Mischwassertemperatur bewegt werden. Beispielsweise wird die Mischwassertemperatur gemessen und die Position des Thermostats solange händisch verstellt, bis eine gewünschte Mischwassertemperatur eingestellt ist. Hierdurch wird bewirkt, dass die Position des Thermostaten der Referenzposition des Gebers nach der mechanischen Kopplung zugeordnet ist.

Die zuvor beschriebenen Weiterbildungsvarianten sind sowohl einzeln als auch in Kombination besonders vorteilhaft. Dabei können sämtliche Weiterbildungsvarianten untereinander kombiniert werden. Einige mögliche Kombinationen sind in der Beschreibung der Ausführungsbeispiele der Figuren erläutert. Diese dort dargestellten Möglichkeiten von Kombinationen der Weiterbildungsvarianten sind jedoch nicht abschließend.

Im Folgenden wird die Erfindung durch Ausführungsbeispiele anhand zeichnerischer Darstellungen näher erläutert.

Dabei zeigen

Fig. 1     eine schematische Ansicht eines Antriebs und einer Schaltung;

Fig. 2     eine schematisches Ablaufdiagramm eines Verfahrens;

Fig. 3     ein schematisches Diagramm.

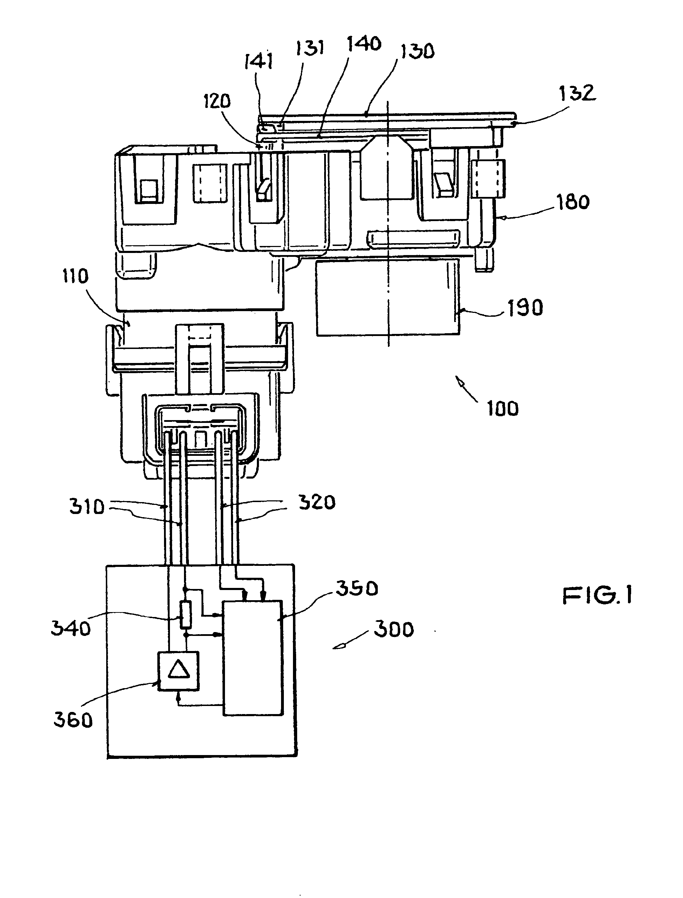

In Fig. 1 ist eine schematische Ansicht eines Antriebs 100 und einer Schaltung 300 für ein Mischventil dargestellt. Der Antrieb 100 weist einen mechanisch kommutierten Elektromotor 110 auf, der über ein Getriebe in einem Getriebegehäuse 180 auf die Kupplung 190 wirkt. Mit der Kupplung ist ein Nockenring 130 mit Nocken 131 und 132 drehfest verbunden. Die Nocken 131, 132 des Nockenrings 130 betätigen über ein Übertragungselement 140 einen Schalter 120. Der Stößel des Schalters 120 wird dabei betätigt, indem ein Nocken 131, 132 des Nockenrings 130 eine federnd gelagerte Erhöhung 141 des Übertragungselementes beim Überfahren in axialer Richtung auf den Schalter 120 drückt. Der Schalter 120 kann beispielsweise als Umschalter, Öffner oder Schließer ausgebildet sein.

Der Nockenring 130 weist einen schmalen Nocken 131 und einen breiten Nocken 132 auf. Beide Nocken 131, 132 weisen entsprechende Flanken auf, die mit der federnd gelagerten Erhöhung 141 des Übertragungselements 140 zusammenwirken. Das Übertragungselement 140 ist dabei drehfest am Getriebegehäuse 180 und damit ortsfest zum Schalter 120 befestigt. Hingegen wird der Nockenring 130 abtriebsseitig mitgedreht, so dass die Nocken 131, 132 relativ zur Erhöhung 141 des Übertragungselements 140 in radialer Richtung verstellt werden. Der Nockenring 130 weist weiterhin eine Welle mit Außenverzahnung auf, die eine drehfeste Kopplung des Nockenrings 130 mit der Kupplung 190 ermöglicht.

In Fig. 1 ist weiterhin eine Schaltung 300 schematisch dargestellt, die mit dem Elektromotor 110 des Antriebs 100 über Kabel 310 verbunden ist. Die Schaltung 300 ist zur Steuerung des Elektromotors 110 ausgebildet. Hierzu weist die Schaltung 300 einen Leistungsschalter 360, beispielsweise ein Relais oder einen Halbleiterschalter auf, so dass der Elektromotor 110 über die Kabel 310 bestromt werden kann. Die Schaltung 300 weist eine Mess-Steuer-Vorrichtung 350 - beispielsweise einen Mikrocontroller - auf, mittels derer der Leistungsschalter 360 angesteuert wird.

Die Schaltung 300 ist zudem ausgebildet, eine Drehposition des Antriebs 100 aus einer Welligkeit eines Motorstroms zu bestimmen. Hierzu weist die Schaltung 300 in einer Verbindung zum Elektromotor 110 einen Shunt 340 auf, der mit einem Messeingang der Mess-Steuer-Vorrichtung 350 verbunden ist. Die Schaltung 300 ist eingerichtet mittels der bestimmten Drehposition die Mischwassertemperatur zu steuern. Beispielsweise ist eine Eingabevorrichtung (nicht dargestellt) vorgesehen, mittels derer eine Mischwassertemperatur (beispielsweise 35°C) in die Mess-Steuer-Vorrichtung 350 eingegeben werden kann. Hierzu sind beispielsweise Tasten oder ein Drehregler vorgesehen (nicht dargestellt). Der gewählten Mischwassertemperatur wird dabei von der Mess-Steuer-Vorrichtung 350 eine Drehposition zugeordnet. Der Elektromotor 110 wird für eine Drehbewegung in Richtung zur zugeordneten Drehposition mittels des Leistungsschalters 360 bestromt.

Während der Drehbewegung des Elektromotors 110 wird die Welligkeit des Motorstroms durch den Elektromotor 110 zur Bestimmung der aktuellen Position genutzt. Jeder Welle wird dabei in Abhängigkeit von der Anzahl der Kommutatorlamellen des Elektromotors 110 ein Drehwinkel zugeordnet. Dabei kann der aktuelle Positionswert durch Addieren oder Subtrahieren gezählter Wellen der Welligkeit des Motorstroms bestimmt werden. Mit einem Erreichen der der gewünschten Mischwassertemperatur zugeordneten Drehposition wird der Elektromotor 110 durch die Mess-Steuer-Vorrichtung 350 gestoppt, in dem die Mess-Steuer-Vorrichtung 350 den Leistungsschalter 360 entsprechend steuert.

Vor einem Koppeln des Antriebs 100 mit einer Mischmechanik des Mischers über die Kupplung 190 wird der Nockenring 130 bevorzugt automatisch in eine Normierungsposition verfahren, wobei in der Normierungsposition der Nocken 131 den Schalter 120 betätigt. Die Normierungsposition kann dabei auch als Referenzposition bezeichnet werden, da in dieser Position der bestimmte Positionswert der realen Position entspricht. Eine Differenz zwischen bestimmten Positionswert und Referenzposition wird mit Betätigung des Schalters 120 zur Bestimmung einer Abweichung ausgewertet oder gelöscht. Der Nocken 131 kann dabei von dem Nocken 132 durch die unterschiedlichen Breiten der Nocken unterschieden werden. Hierzu steuert die Mess-Steuer-Vorrichtung 350 ein Überfahren des Nockens und bestimmt die Breite des Nockens 131, 132 anhand der Dauer der Betätigung des Schalters 130 oder einer gezählten Anzahl von Wellen der Welligkeit. Hierzu ist die Schaltung 300 über die Kabel 320 mit dem Schalter 120 verbunden. Beispielsweise wird die Dauer der Betätigung des Schalters 120 oder die gezählte Anzahl von Wellen der Welligkeit während der Betätigung des Schalters 120 mit einem Schwellwert verglichen. Danach steuert die Mess-Steuer-Vorrichtung 350 den Antrieb 100 auf die Drehposition des schmalen Nockens 131 als Referenzposition.

Die Mischmechanik wird nun durch Einstellung der Position eines Thermostaten für die zugehörige Mischtemperatur - beispielsweise 38°C - mittels Messen der Mischtemperatur justiert. Beim erneuten Überfahren diese Drehposition erzeugt der Nocken 131 durch Betätigung des Schalters 120 einen Schaltimpuls charakteristischer Dauer, der der zugehörigen Mischtemperatur zugeordnet ist.

Ein aus der Welligkeit ermittelter aktueller Positionswert der Drehposition ist meist fehlerbehaftet, weicht also von der realen Drehposition ab. Fehler können dabei beispielsweise durch doppelt auftretende oder ausbleibende Wellen erzeugt werden. Eine weitere Fehlerquelle tritt beim Anfahren und Stoppen des Elektromotors 110 auf, wobei eine Anzahl von Wellen der Welligkeit beim Anfahren und Stoppen nicht mitgezählt wird. Der Fehler nimmt daher meist mit der Anzahl der Verstellungen zu.

Die Schaltung 300 gemäß Fig. 1 ist ausgebildet und eingerichtet die aus der Welligkeit des Motorstroms bestimmte Drehposition anhand des charakteristischen Signals des Schalters 120 der vorbestimmten Mischwassertemperatur zuzuordnen. Mit Erkennung des Nockens 131 aus der Betätigung des Schalters 120 ist die reale Drehposition bekannt, so dass der realen Drehposition ein aktueller Positionswert zugeordnet werden kann. Beispielsweise wird der aktuelle Positionswert durch einen fest gespeicherten, vorbestimmten Wert überschrieben. Dies kann auch als Normierung bezeichnet werden.

Der breitere Nocken 132 erzeugt beim Überfahren des Schalters 120 ebenfalls ein charakteristisches Signal des Schalters 120, das eine Stellwegbegrenzung bewirkt. Hierzu erkennt die Mess-Steuer-Vorrichtung 350 anhand der Dauer der Betätigung des Schalters 120 das Überfahren des breiten Nockens 132 und stoppt den Elektromotor 110 in Abhängigkeit von dem für die Stellwegbegrenzung charakteristischen Signal. Hierdurch wird der Vorteil erzielt, dass die Mechanik des Mischventils nicht in eine mechanische Begrenzung (Anschlag) verfahren wird, die zu einer Beschädigung des mechanisch kommutierten Elektromotors 110 oder des Getriebes führen könnte.

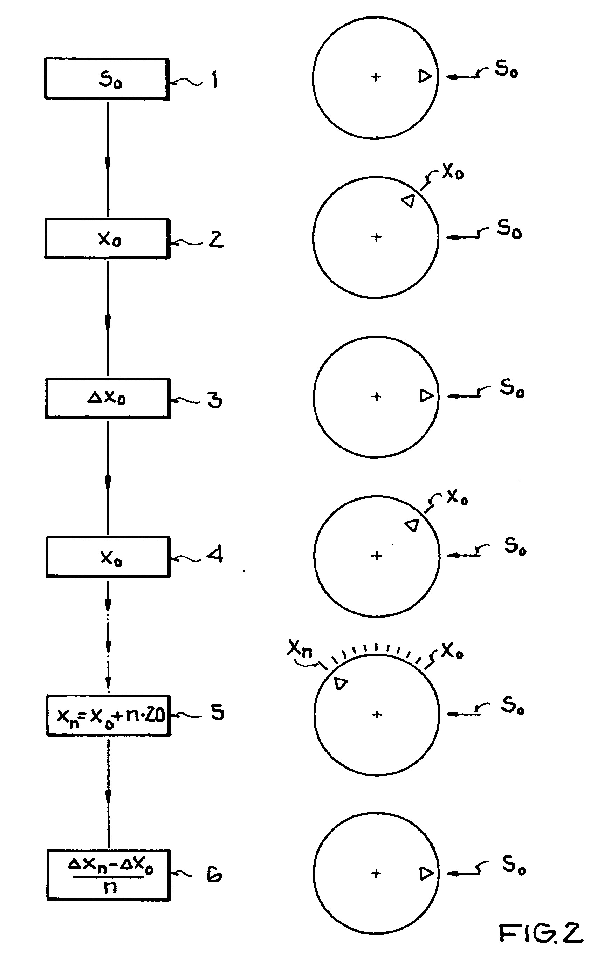

Fig. 2 zeigt ein Ausführungsbeispiel eines Ablaufdiagramms eines Verfahrens. In Schritt 1 wird die Referenzposition s0 anhand eines Positionssensorsignals bestimmt. Im Schritt 2 wird in die Position X0, beispielsweise mit dem Positionswert 100 verfahren. In Schritt 3 wird in die Referenzposition s0 zurück verfahren. Beim Zurückfahren werden die Wellen der Welligkeit des Motorstroms gezählt. Durch das Stoppen in der Position X0 und dem anschließenden Starten der Verstellung in die Gegenrichtung wird ein Fehler generiert. Daher weicht die Zahl der gezählten Wellen beim Zurückfahren in die Referenzposition s0 von 100 ab. Die Differenz wird als Abweichung $\Delta X0$ gespeichert.

In Schritt 4 wird der Antrieb erneut in die Position x0 verfahren.

Bis zum Verfahrensschritt 5 wird der Antrieb n-mal nacheinander in dieselbe Verstellrichtung von der Position X0 bis zur Position Xn verstellt. Für jede dieser Verstellungen startet und stoppt der mechanisch kommutierte Elektromotor 110. Die Endposition der n Verstellungen ist im Ausführungsbeispiel der Fig. 2:

$$Xn = Xo + n*20 \qquad\qquad\qquad (1)$$

Im Schritt 6 wird der Antrieb ohne Zwischenstopp von der Position Xn zur Referenzposition s0 zurück verfahren. Dabei werden die Wellen der Welligkeit des Motorstroms des mechanisch kommutierten Elektromotors 110 gezählt. Von der Anzahl der gezählten Wellen wird der Positionswert für die Position Xn subtrahiert, so dass man eine Gesamtabweichung ΔXn erhält. Von der Gesamtabweichung ΔXn wird die Abweichung ΔX0 für die Position X0 subtrahiert und die erhaltene Differenz wird durch die Zahl n geteilt. Hierdurch wird der Korrekturwert K berechnet zu:

$$K = (\Delta Xn - \Delta X0) / n \qquad\qquad (2)$$

Der Korrekturwert K ist ein Durchschnittswert der Abweichungen der n Verstellungen. Der Korrekturwert K wird gespeichert und in einem Normalbetrieb aus dem Speicher bei Bedarf ausgelesen. Der Korrekturwert K wird beispielsweise bei einem Start des Elektromotors 110 als Offset zur aktuellen Position addiert.

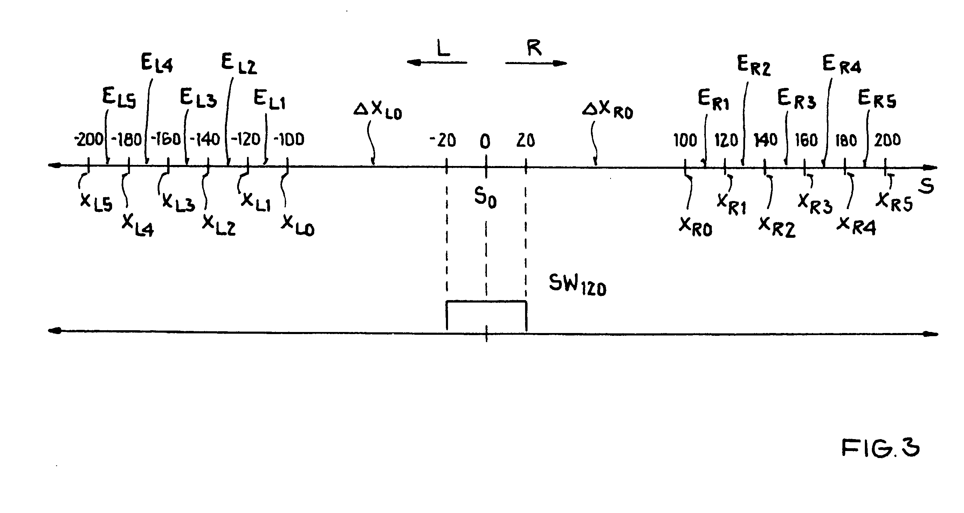

Ein Diagramm mit aus der Welligkeit bestimmten Positionswerten ist in Fig. 3 auf einer Linie schematisch dargestellt. Ist der Schalter 120 beispielsweise als Schließer ausgebildet, wird durch den Schalter 120 das Signal SW120 erzeugt. Bei einem Rechtslauf in die Verstellrichtung R erzeugt der Schalter 120 eine Schaltflanke bei dem Positionswert -20. Bei einem Linkslauf in die Verstellrichtung L erzeugt der Schalter 120 eine Schaltflanke bei dem Positionswert 20. Mittig zwischen beiden Positionswerte -20, 20 der Schaltflanken wird eine Referenzposition s0 mit dem Positionswert 0 festgelegt.

In dem Verfahren sollen Korrekturwerte für eine Fehlercharakteristik des Elektromotors bestimmt werden. Die Fehlercharakteristik weist dabei Fehler bei einer Positionsbestimmung auf, die beim Stoppen und Starten des Elektromotors auftreten. Dabei wird ein Korrekturwert für einen Rechtslauf in die Verstellrichtung R und ein Korrekturwert für einen Linkslauf in die Verstellrichtung L bestimmt. Zunächst wird der Antrieb in die mittels des Positionssensors 120 sensierbare Referenzposition s0 verfahren. Ein Stoppen in der Referenzposition s0 ist dabei nicht erforderlich, so dass der Antrieb 100 beispielweise ausgehend von einem beliebigen negativen Positionswert in die Referenzposition s0 und weiter in die Position XR0 mit dem Positionswert 100 verfahren wird.

Bei einem Zurückverfahren von der Position XR0 auf die Referenzposition s0 wird eine Anzahl der Wellen der Welligkeit gezählt. Beim Hin- und Zurückfahren zur Position XR1 entsteht die Abweichung ΔXR0 aufgrund des Stoppens und Startens bei der Position XR1.

Danach wird der Antrieb 100 ausgehend von der Referenzposition s0 erneut in die Position XR0 und danach in mehrere Positionen XR1, XR2, XR3, XR4, XR5 mit unterschiedlichen Abständen (120, 140, 160, 180, 200) zur Referenzposition s0 verfahren. Die Zahl n der Formel (2) ist im Ausführungsbeispiel der Fig. 3 fünf. In jeder Position XR0, XR1, XR2, XR3, XR4, XR5 wird der Elektromotor 110 gestoppt. Dabei tritt aufgrund des Stoppens und Startens jeweils eine Abweichung ER1, ER2, ER3, ER4, ER5 zwischen den Positionen XR0, XR1, XR2, XR3, XR4, XR5 auf.

Bei einem Zurückfahren von der Position XR5 zur Referenzposition s0 wird eine Zahl der Wellen der Welligkeit des Motorstroms gezählt. Die gezählte Zahl der Wellen weicht von der Summe der gesteuerten Verfahrwegstrecken zwischen s0, XR0, XR1, XR2, XR3, XR4 und XR5 ab, ist also von dem Positionswert 200 verschieden.

Zur Bestimmung von Positionsabweichungen wird von der Zahl der gezählten Wellen die Anzahl der Wellen zur Rückverstellung aus der Position XR0 in die Referenzposition s0 subtrahiert. Weiterhin wird die Positionsdifferenz 100 zwischen der Position XR0 und der Position XR5 von der Zahl der gezählten Wellen subtrahiert. Übrig bleibt dabei die Summe der Positionsabweichung ER1 + ER2 + ER3 + ER4 + ER5.

Ein Korrekturwert für den Rechtslauf in die Verstellrichtung R wird aus den bestimmten Positionsabweichungen ermittelt, indem die Summe der Positionsabweichung ER1 + ER2 + ER3 + ER4 + ER5 durch eine Anzahl der Verstellungen mit Anfahren und Stoppen (im Ausführungsbeispiel der Fig. 3 entsprechend fünf Verstellungen, n = 5) dividiert wird, um einen Mittelwert der Abweichungen als Korrekturwert für eine Verstellung zu erhalten. Dieser berechnete Korrekturwert für den Rechtslauf wird in einem Speicher der Mess-Steuer-Vorrichtung 350 gespeichert. Bei nachfolgenden Verstellungen in Verstellrichtung R des Rechtslaufs wird bei Start die aktuelle Position durch den Korrekturwert als Offsetwert durch Subtraktion bzw. Addition geändert.

Entsprechend wird ein weiterer Korrekturwert für den Linkslauf in die Verstellrichtung L ermittelt. Entsprechend wird zunächst in die Verstellpositionen XL0 mit dem Positionswert -100 und zurück zur Referenzposition verfahren und die Abweichung ΔXL0 ermittelt. Nachfolgend werden mit jeweils einem Stopp und einem Start die zueinander äquidistanten Positionen XL1, XL2, XL3, XL4, XL5 nacheinander angefahren. Dabei werden durch das Stoppen und Starten Abweichungen EL1, EL2, EL3, EL4 und EL5 erzeugt. Aus der Summe dieser Abweichungen EL1 + EL2 + EL3 + EL4 + EL5 wird durch Division durch deren Anzahl fünf ein Mittelwert der Abweichungen als Korrekturwert für den Linkslauf berechnet. Dieser berechnete Korrekturwert für den Linkslauf wird in dem Speicher der Mess-Steuer-Vorrichtung 350 gespeichert. Bei nachfolgenden Verstellungen in Verstellrichtung L des Linkslaufs wird bei Start die aktuelle Position durch den Korrekturwert als Offsetwert durch Subtraktion bzw. Addition geändert.

Die Erfindung ist nicht auf die dargestellten Ausgestaltungsvarianten der Figuren 1 bis 3 beschränkt. Beispielsweise ist es möglich einen anderen Geber, beispielsweise eine magnetische (magnetisierte oder magnetisch leitfähige) Scheibe und einen magnetischen Sensor (Hallsensor, induktiver Näherungsschalter) zu verwenden. Auch ist es möglich eine andere Anzahl von Verstellungen gleicher Verstelllänge vorzusehen. Ebenfalls ist es möglich eine Mehrzahl von Referenzpositionen vorzusehen, wobei eine Bestimmung von Korrekturwerten durch Messung von Fehlern zwischen zwei Referenzpositionen erfolgt. In diesem Fall könnte auch die Ermittlung einer einzigen Positionsabweichung ausreichen. Der Geber kann zumindest über einen Teil des Verstellweges auch als Inkrementalgeber ausgebildet sein.

Bezugszeichenliste

> 100 Antrieb
> 110 Elektromotor
> 120 Schalter
> 130 Nockenring
> 131, 132 Nocken
> 140 Übertragungselement
> 141 Erhöhung
> 180 Getriebegehäuse
> 190 Kupplung
> 300 Schaltung
> 310, 320 Kabel
> 340 Shunt
> 350 Mess-Steuer-Vorrichtung
> 360 Leistungsschalter
> L, R Verstellrichtung
> n Anzahl
> s Drehposition
> s0 Referenzposition
> X0, Xn, XR0, XR1, XR2, XR3, XR4, XR5, XL1, XL2, XL3, XL4, XL5 Position
> $\Delta$Xn, $\Delta$X0, $\Delta$XR0, $\Delta$XL0, ER1, ER2, ER3, ER4, ER5, EL1, EL2, EL3, EL4, EL5 Abweichung, Fehler
> SW120 Schaltersignal

**Patentansprüche**

1. Verfahren zum Betrieb eines Antriebs (100) mit einem mechanisch kommutierten Elektromotor (110) für ein Mischventil für Kalt- und Heißwasser mit thermostatischer Regelung der Mischwassertemperatur

    - bei dem eine Drehposition (s) des Antriebs (100) aus einer Welligkeit eines Motorstroms des Elektromotors (110) durch eine Schaltung (300) bestimmt wird,
    - bei dem zumindest ein Korrekturwert (K) für eine Fehlercharakteristik des Elektromotors (110) beim Starten und Stoppen bestimmt wird,
    - indem der Antrieb (100) in eine mittels eines Positionssensors (120) sensierbare Referenzposition (s0) verfahren wird,
    - indem der Antrieb (100) ausgehend von der Referenzposition (s0) in mehrere zur Referenzposition (s0) beabstandete Positionen (XR0...XR5, XL0...XL5, X0...Xn) verfahren wird, wobei der Elektromotor (110) durch die Schaltung (300) für eine Anzahl von Wellen der Welligkeit des Motorstroms angesteuert wird,
    - indem in die Referenzposition zurück verfahren und die Anzahl der Wellen der Welligkeit gezählt wird und zumindest eine Positionsabweichung ($\Delta$XL0, EL1...EL5, $\Delta$XR0, ER1...ER5) durch die Schaltung (300) bestimmt wird, wobei die Positionsabweichung ($\Delta$XL0, EL1...EL5, $\Delta$XR0, ER1...ER5) als Differenz der Anzahl von gezählten Wellen zum Verfahren in die mehreren beabstandeten Positionen und der Anzahl der Wellen zur Rückverstellung in die Referenzposition ermittelt wird,
    - bei dem der Elektromotor (110) zur Bestimmung der Korrekturwerte durch die Schaltung (300) in jeder der von der Referenzposition (s0) beabstandeten Positionen (XR0...XR5, XL0...XL5, X0...Xn) gestoppt wird und
    - indem der Korrekturwert (K) aus der bestimmten Positionsabweichung ($\Delta$XL0, EL1...EL5, $\Delta$XR0, ER1...ER5) ermittelt und gespeichert wird.

**2.** Verfahren nach Anspruch 1,

- bei dem zur Bestimmung von zumindest zwei Korrekturwerten (K) der Antrieb (100) ausgehend von der Referenzposition (s0) in beide Verstellrichtungen (L, R) verfahren wird.

**3.** Verfahren nach einem der vorhergehenden Ansprüche,

- bei dem der Elektromotor (110) zur Bestimmung der Korrekturwerte durch die Schaltung (300) in jeder der von der Referenzposition (s0) beabstandeten Positionen (XR0...XR5, XL0...XL5, X0...Xn) gestoppt wird.

**4.** Verfahren nach einem der vorhergehenden Ansprüche,

- bei dem der Korrekturwert (K) durch Mittelung von Positionsabweichungen (ER1...ER5, EL1...EL5) berechnet wird.

**5.** Verwendung eines Verfahrens nach einem der vorhergehenden Ansprüche zur Steuerung der Mischwassertemperatur des thermostatisch geregelten Mischventils,

- bei dem ein Thermostat (200) des Mischventils für Kaltwasser und Warmwasser mittels des Elektromotors (110) des Antriebs (100) positioniert wird,
- bei dem die Mischwassertemperatur anhand der bestimmten Drehposition gesteuert wird.

**6.** Vorrichtung mit einem Mischventil für Kalt- und Heißwasser mit thermostatischer Regelung der Mischwassertemperatur

- mit einem Antrieb (100) mit einem mechanisch kommutierten Elektromotor (110),
- mit einer Schaltung (300) zur Steuerung des Elektromotors (110),
- bei dem die Schaltung (300) ausgebildet ist eine Drehposition (s) des Antriebs (100) aus einer Welligkeit eines Motorstroms zu bestimmen,
- bei dem der Antrieb (100) einen mit der Schaltung (300) verbundenen Positionssensor (120) aufweist und bei dem die Schaltung (300) eingerichtet ist, den Antrieb (100) in eine mittels des Positionssensors (120) sensierbare Referenzposition (s0) durch Steuerung des Elektromotors (110) zu verfahren,
- bei dem die Schaltung (300) eingerichtet ist, den Antrieb (100) ausgehend von der Referenzposition (s0) in mehrere von der Referenzposition (s0) beabstandete Positionen (XR0...XR5, XL0...XL5, X0...Xn) zu verfahren, wobei der Elektromotor (110) durch die Schaltung (300) für eine Anzahl von Wellen der Welligkeit des Motorstroms angesteuert und zur Bestimmung der Korrekturwerte durch die Schaltung (300) in jeder der von der Referenzposition (s0) beabstandeten Positionen (XR0...XR5, XL0...XL5, X0...Xn) gestoppt wird,
- und in die Referenzposition zurück verfahren und zumindest eine Positionsabweichung ($\triangle$XL0, EL1...EL5, $\triangle$XR0, ER1...ER5) zu bestimmen, wobei die Positionsabweichung ($\triangle$XL0, EL1...EL5, $\triangle$XR0, ER1...ER5) als Differenz zwischen der Anzahl von Wellen aus dem Verfahren in die beabstandete Position und Rückfahren in die Referenzposition ermittelt wird und
- bei dem die Schaltung (300) einen Speicher aufweist und eingerichtet ist zumindest einen Korrekturwert (K) für eine Fehlercharakteristik des Elektromotors (110) aus den bestimmten Positionsabweichungen ($\triangle$XL0, EL1...EL5, $\triangle$XR0, ER1...ER5) zu ermitteln und in dem Speicher zu speichern.

**7.** Vorrichtung nach Anspruch 6,

- bei der das Mischventil einen mit dem Antrieb (100) mechanisch koppelbaren oder gekoppelten Thermostaten (200) aufweist, und
- bei der die Schaltung (300) eingerichtet ist anhand der bestimmten Drehposition die Mischwassertemperatur zu steuern.

**Claims**

**1.** Method of operating a drive means (100) with a mechanically commutated electric motor (110) for a mixer tap for cold and hot water having thermostatic regulation of the mixed water temperature,

- wherein a rotated position (s) of the drive means (100) is determined by a circuit (300) from a motor current ripple of the electric motor (110),
- wherein at least one correction value (K) for an error characteristic of the electric motor (110) on starting and stopping is determined
- by movement of the drive means (100) into a reference position (s0) which can be sensed by means of a position sensor (120),
- by movement of the drive means (100), starting from the reference position (s0), into a plurality of positions (XR0...XR5, XL0...XL5, X0...Xn) spaced apart from the reference position (s0), the electric motor (110) being actuated by the circuit (300) for a number of waves of the motor current ripple,
- by return to the reference position and counting of the number of waves of the ripple and determination by the circuit (300) of at least one positional deviation ($\Delta$XL0, EL1...EL5, $\Delta$XR0, ER1...ER5), the positional deviation ($\Delta$XL0, EL1...EL5, $\Delta$XR0, ER1...ER5) being calculated as the difference between the number of waves counted for movement into the plurality of spaced-apart positions and the number of waves for resetting to the reference position,
- wherein to determine the correction values the electric motor (110) is stopped by the circuit (300) in each of the positions (XR0...XR5, XL0...XL5, X0...Xn) spaced apart from the reference position (s0), and
- by calculation of the correction value (K) from the positional deviation ($\Delta$XL0, EL1...EL5, $\Delta$XR0, ER1...ER5) that has been determined and storage of that correction value.

2. Method according to claim 1,

- wherein to determine at least two correction values (K) the drive means (100), starting from the reference position (s0), is moved in both displacement directions (L, R).

3. Method according to either one of the preceding claims,

- wherein to determine the correction values the electric motor (110) is stopped by the circuit (300) in each of the positions (XR0...XR5, XL0...XL5, X0...Xn) spaced apart from the reference position (s0).

4. Method according to any one of the preceding claims,

- wherein the correction value (K) is calculated by averaging positional deviations (ER1...ER5, EL1...EL5).

5. Use of a method according to any one of the preceding claims for controlling the mixed water temperature of the thermostatically regulated mixer tap,

- wherein a thermostat (200) of the mixer tap for cold water and hot water is positioned by means of the electric motor (110) of the drive means (100),
- wherein the mixed water temperature is controlled on the basis of the rotated position that has been determined.

6. Device with a mixer tap for cold and hot water having thermostatic regulation of the mixed water temperature,

- having a drive means (100) with a mechanically commutated electric motor (110),
- having a circuit (300) for controlling the electric motor (110),
- wherein the circuit (300) is arranged to determine a rotated position (s) of the drive means (100) from a motor current ripple,
- wherein the drive means (100) has a position sensor (120) connected to the circuit (300) and wherein the circuit (300) is configured to move the drive means (100) into a reference position (s0), which can be sensed by means of the position sensor (120), by controlling the electric motor (110),
- wherein the circuit (300) is configured to move the drive means (100), starting from the reference position (s0), into a plurality of positions (XR0...XR5, XL0...XL5, X0...Xn) spaced apart from the reference position (s0), the electric motor (110) being actuated by the circuit (300) for a number of waves of the motor current ripple and, to determine the correction values, being stopped by the circuit (300) in each of the positions (XR0...XR5, XL0...XL5, X0...Xn) spaced apart from the reference position (s0),
- and to return to the reference position and to determine at least one positional deviation ($\Delta$XL0, EL1...EL5, $\Delta$XR0, ER1...ER5), the positional deviation ($\Delta$XL0, EL1...EL5, $\Delta$XR0, ER1...ER5) being calculated as the difference between the number of waves from the movement into the spaced-apart position and the return to the reference position, and

- wherein the circuit (300) has a memory and is configured to calculate at least one correction value (K) for an error characteristic of the electric motor (110) from the positional deviations ($\Delta$XL0, EL1...EL5, $\Delta$XR0, ER1...ER5) that have been determined and to store that correction value in the memory.

**7.** Device according to claim 6,

- wherein the mixer tap has a thermostat (200) which is mechanically coupled or couplable to the drive means (100), and
- wherein the circuit (300) is configured to control the mixed water temperature on the basis of the rotated position that has been determined.


**Revendications**

**1.** Procédé permettant de faire fonctionner un entraînement (100) comprenant un moteur électrique à commutation mécanique (110) destiné à un mitigeur pour de l'eau froide et de l'eau chaude, avec régulation thermostatique de la température de l'eau tiède, selon lequel :

- la position de rotation (s) de l'entrainement (100) est déterminée par un circuit (300) à partir de l'ondulation du courant du moteur électrique (110),
- au moins une valeur de correction (K) d'une caractéristique de défaut du moteur électrique (110) est déterminée lors du démarrage et de l'arrêt,
- en déplaçant l'entraînement (100) dans une position de référence (s0) pouvant être détectée par un capteur de position (120),
- en déplaçant l'entraînement (100), à partir de la position de référence (s0) dans plusieurs positions (XR0...XR5, XL0...XL5, X0...Xn) situées à distance de la position de référence (s0), le moteur électrique (110) étant commandé par le circuit (300) pour plusieurs ondes de l'ondulation du courant moteur,
- en ramenant l'entraînement (100) dans la position de référence en comptant le nombre d'ondes de l'ondulation, et en déterminant au moins un écart de position ($\Delta$XL0, EL1...EL5, $\Delta$FR0, ER1...ER5) au moyen circuit (300), l'écart de position ($\Delta$XL0. EL1...EL5. $\Delta$XR0, ER1...ER5) étant déterminé sous la forme de la différence entre le nombre d'ondes compté lors du déplacement de l'entraînement dans les positions situées à distance et le nombre d'ondes lors du retour de l'entraînement dans la position de référence,
- le moteur électrique (110) est arrêté pour déterminer les valeurs de correction au moyen du circuit (300) dans chacune des positions (XR0...XR5, XL0...XL5, X0...Xn) situées à distance de la position de référence (s0), et
- en déterminant la valeur de correction (K) à partir des écarts de position ($\Delta$XL0. EL1...EL5, $\Delta$XR0. ER1...ER5) déterminés et en la mettant en mémoire.

**2.** Procédé conforme à la revendication 1,
selon lequel pour déterminer au moins deux valeurs de correction (K), l'entraînement (100) est déplacé dans les deux directions de réglage (L, R) en partant de la position de référence (s0).

**3.** Procédé conforme à l'une des revendications précédentes,
selon lequel, pour déterminer les valeurs de correction le moteur électrique (110) est arrêté par le circuit (300) dans chacune des positions (XR0...XR5, XL0...XL5, X0...Xn) situées à distance de la position de référence (s0).

**4.** Procédé conforme à l'une des revendications précédentes,
selon lequel la valeur de correction (K) est calculée par moyenne des écarts de position (ER1...ER5, EL1...EL5).

**5.** Utilisation d'un procédé conforme à l'une des revendications précédentes, pour commander la température de l'eau tiède d'un mitigeur à régulation thermostatique,

- selon lequel un thermostat (200) du mitigeur pour l'eau froide et l'eau chaude est positionné au moyen du moteur électrique (110) de l'entraînement (100), et
- la température de l'eau tiède est commandée à partir de la position de rotation déterminée.

**6.** Dispositif équipé d'un mitigeur pour de l'eau froide et de l'eau chaude avec régulation thermostatique de la température de l'eau tiède, comportant :

- un entraînement (100) équipé d'un moteur électrique (110) à commutation mécanique,
- un circuit (300) de commande du moteur électrique (110),
- dans lequel le circuit (300) est réalisé pour déterminer la position de rotation (s) de l'entraînement (100) à partir de l'ondulation du courant du moteur,
- l'entraînement (100) comporte un capteur de position (120) relié au circuit (300) et le circuit (300) est réalisé pour déplacer l'entraînement (100) dans une position de référence (s0) pouvant être détectée par le capteur de position (120) par commande du moteur électrique (110),
- le circuit (300) est réalisé pour déplacer l'entraînement (100), à partir de la position de référence (s0) dans plusieurs positions (XR0...XR5, XL0...XL5, X0...Xn) situées à distance de la position de référence (s0), le moteur électrique (110) étant commandé par le circuit (300) pour plusieurs ondes de l'ondulation du courant du moteur et étant arrêté pour déterminer les valeurs de correction par le circuit (300) dans chacune des positions (XR0...XR5, XL0...XL5, X0...Xn) situées à distance de la position de référence (s0), et
- étant déplacé pour revenir dans la position de référence et pour déterminer au moins un écart de position (△XL0. EL1...EL5, △XR0, ER1...ER5), l'écart de position (AXL0, EL1...EL5. △XR0, ER1...ER5) étant déterminé sous la forme de la différence entre le nombre d'ondes lors du déplacement de l'entraînement dans les positions situées à distance et le nombre d'ondes lors du retour de l'entraînement dans la position de référence, et
- le circuit (300) comprend une mémoire et est réalisé pour détecter au moins une valeur de correction (K) d'une caractéristique de défaut du moteur électrique (110) à partir des écarts de position (△XL0, EL1...EL5, △XR0, ER1...ER5) déterminés et la mémoriser dans la mémoire.

7. Dispositif conforme à la revendication 6,
   dans lequel :

   - le mitigeur comporte un thermostat (200) couplé ou pouvant être accouplé mécaniquement à l'entraînement (100), et
   - le circuit (300) est réalisé pour commander la température de l'eau tiède à partir de la position de rotation déterminée.

FIG.1

FIG.2

FIG.3

EP 2 374 047 B1

**IN DER BESCHREIBUNG AUFGEFÜHRTE DOKUMENTE**

**In der Beschreibung aufgeführte Patentdokumente**

- DE 3527906 A1
- DE 102005037471 A1
- DE 19729238 C1
- DE 102005018526 A1
- DE 102006033352 A1
- DE 60006928 T2
- EP 1605327 A2
- DE 4138194 A1
- EP 1333150 A2